# EUROPEAN PATENT SPECIFICATION

(11) **EP 0 781 054 B1**
(45) Date of publication and mention of the grant of the patent: **03.03.2004**
(21) Application number: 96402731.2
(22) Date of filing: 13.12.1996
(51) Int. Cl.: H04N 7/52, G06F 3/14

(54) **Method of encoding and decoding for data transmission**
Kodierungs- und Dekodierungsverfahren für Datenübertragung
Procédé de codage et de décodage pour la transmission de données

(30) Priority: 15.12.1995 JP 34778095
(43) Date of publication of application: 25.06.1997
(73) Proprietor: SONY CORPORATION, Tokyo 141 (JP)
(72) Inventor: Kikuchi, Hidekazu, Shinagawa-ku, Tokyo (JP)
(74) Representative: Thévenet, Jean-Bruno

(56) References cited:
- EP-A- 0 680 215
- US-A- 3 689 699
- US-A- 4 247 936

## Description

### BACKGROUND OF THE INVENTION

### FIELD OF THE INVENTION

This invention relates to an image data transmitting method and an image data receiving method, and more particularly, is applicable to the case where the image data is transmitted to a digital-control display device which is typified by a liquid crystal display device for displaying an image processed by a computer.

### DESCRIPTION OF THE RELATED ART

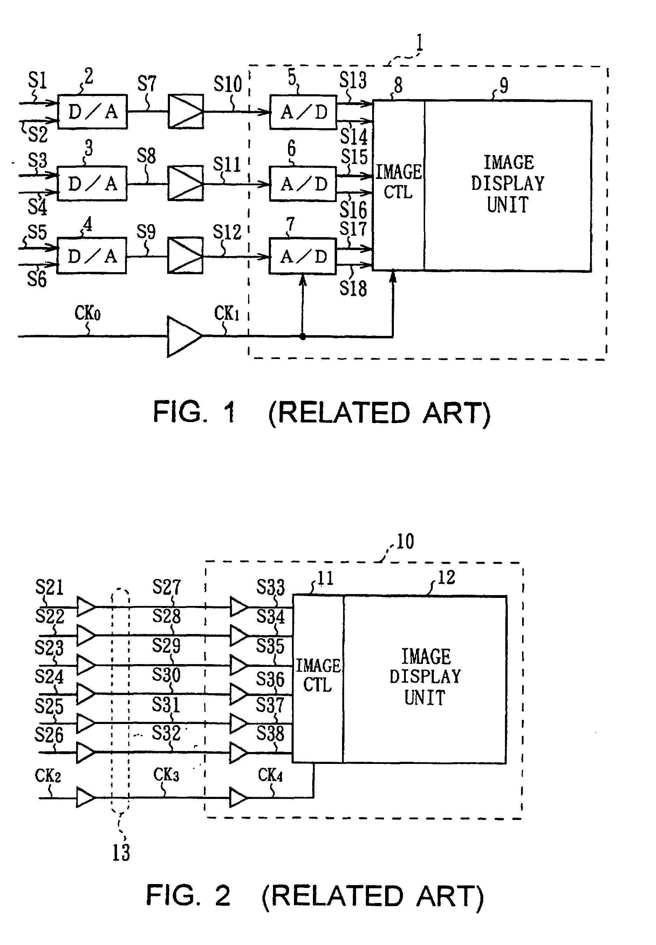

As shown in Fig. 1, to a liquid crystal display device 1 of this kind there are transmitted, usually, video signals S10 to S12 which are computer-processed digital image data of the three primary colours S1 to S6 which have been converted to analog form with respect to each primary colour. The liquid crystal display device 1 reconverts the video signals S10 to S12 to digital image data S13 to S18 by means of analog-to-digital converters 5 to 7, and controls the display state of the image in real time.

In this method, there is the disadvantage that the manufacturing cost of the liquid crystal display device increases, in response to increasing the number of the displaying pixels or the gradations, because high-speed multi-bit analog-to-digital converters are required. For this reason, as shown in Fig. 2, a method has been adopted whereby image data S21 to S26 processed in parallel in a computer are transmitted in parallel (as signals S27 to S32) through a cable to a liquid crystal display device 10.

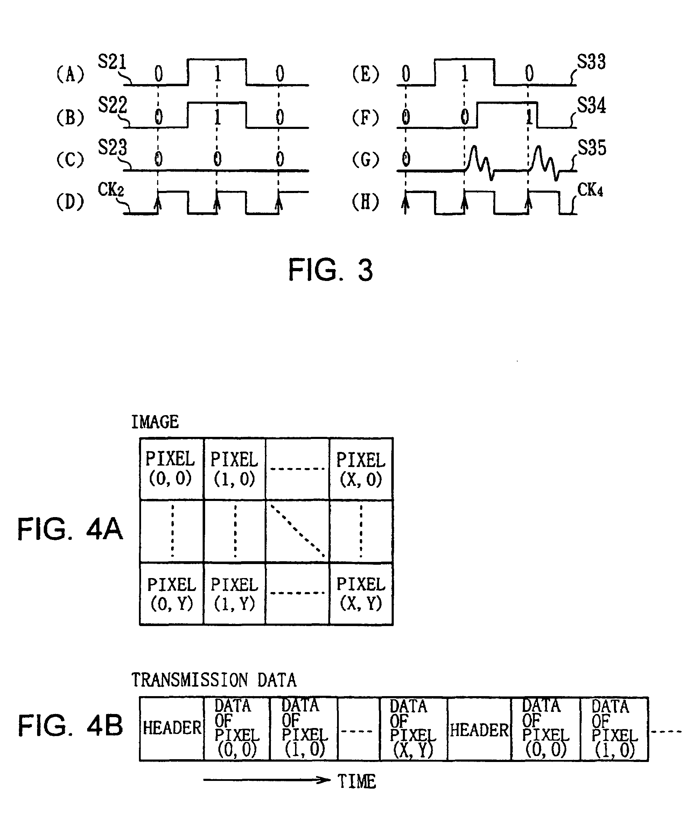

However, in the case where image data S27 to S32 is transmitted in parallel through a transmission cable 13 comprising plural conductors bundled together, skew (synchronous shifting) S34 or crosstalk S35 may be generated, as shown in waveforms (F) and (G) respectively of Fig. 3, due to a mutual interference among the transmitted image data signals S27 to S32. Therefore, the problem has arisen that the transmission capacity and the transmission distance of the transmission cable 13 are restricted, and the sizes of the transmission cable 13 and the connector are increased.

To avoid such problems, it could be envisaged to serialise the image data and then transmit it. By this method, it is possible to eliminate skew or crosstalk of the image data and transmit the image data.

However, as shown in Fig. 4B, according to the serialisation, the image data of the respective pixels (0,0) to (X,Y) of one sheet of the image have been translated into serial image data wherein a certain number of bits simply becomes one word. In this connection, as shown in Fig. 4A, one sheet of the image is comprised of X pixels and Y pixels, respectively, in the horizontal direction and the vertical direction.

In this translating method, it has been required to add to the image data control data which is referred to as a header, so as to establish the word synchronisation at the time of reconverting the received serial image data into the image data of the respective pixels.

However, one word of this header comprises a different number of bits compared to one word of the image data. So, there is the disadvantage that the construction becomes complicated, due to the fact that the image control circuit in the liquid crystal display device is required to distinguish the header, having a different word length, from the serial image data and to extract it.

In this method, there is the problem that the image data are broken (interrupted) when the header is extracted, and so stabilised reception cannot be performed. Furthermore, in the method for transmitting the digital image data in parallel, there is the disadvantage that respective dedicated cables are separately required for transmission of the vertical synchronisation data and the horizontal synchronisation data, in addition to the cable for transmission of the image data, therefore, the sizes of the connector and the transmission cable become large and the handling is complicated.

Different synchronisation systems for digital communication systems comprising a multiplexer in the transmitter and a demultiplexer in the receiver are disclosed in US 3 689 699 A, EP 0 680 215 A and US 4 247 936 A.

### SUMMARY OF THE INVENTION

In view of the foregoing, an object of this invention is to provide an image data transmitting method and an image data receiving method which can transmit and receive the image data and the synchronisation data through one transmission line without a break of transmission or reception of the image data.

The foregoing object and other objects of the invention have been achieved by the provision of an image data transmitting method as defined in claim 1, comprising the steps of: time-division multiplexing image data which is comprised of m-bit data formed for respective pixels, and synchronisation data which sets the synchronous timing of the image data, and then transmitting them in series; wherein the processing at a time when only the m-bit data is to be transmitted and the processing at a time when m-bit data and the synchronisation data are to be transmitted are performed according to different procedures, and then, in both cases, the transmission is performed with the data in n-bit form. When the synchronisation data is not transmitted, "n" and "k" are set such that n > m and k < n-m, and the m-bit data for each pixel is translated into n-bit coded data on the basis of a coding translation table between n-bit coded data and m-bit data, wherein the n-bit data codes are selected such that a stream of identical logical bits will not continue for more than or equal to "k" even if any combination of code words is time-division multiplexed and transmitted sequentially; and then the n-bit coded data is time-division multiplexed and transmitted. When the synchronisation data is transmitted, the m-bit data for each pixel is directly time-division multiplexed, and a serial code which is comprised of n-m bits and includes a specific bit string, which is "k" continuous bits of identical logic, is added to the time-division multiplexed m-bit data, and then transmitted.

Under the condition n > m and k < n-m, when the synchronisation data is not transmitted, the m-bit image data for the respective pixels is translated into n-bit code words and then time-division multiplexed and transmitted, whereby there will not be a stream of "k" or more identical logical bits in the n-bit coded data even if the code words are sequentially time-division multiplexed in any combination and transmitted. On the other hand, when the synchronisation data is transmitted, the m-bit image data of the pixels is directly time-division multiplexed, and to this data is added a serial code which is comprised of n-m bits and includes a specific bit string which is a continuous "k" bits of identical logic, so that the image data and the synchronisation data can be transmitted and received through one transmission line without a break of transmission or reception of the image data.

Further, in the present invention, the n-bit serial codestream is processed using different procedures according to whether or not the specific bit string, which is a continuous "k" bits of identical logic, has been detected from the n-bit serial coded data which has been received via the transmission line. Such "n", "m" and "k" are set that n > m and k < n-m. When the specific bit string, which is the continuous "k" bits of identical logic, has been detected from the n-bit serial coded data which has been received through the transmission line, the synchronisation timing is set for the m-bit image data for each pixel which is obtained from the n-bit serial coded data, and m-bit data, which has been obtained by eliminating from the n-bit serial coded data the continuous n-m bits including the specific bit string, is reconverted to the m-bit image data of the first pixel on the scanning line. When the specific bit string, i.e. the continuous "k" bits of identical logic, is not detected in the n-bit serial coded data, "n", "m" and "k" are set, and the n-bit serial coded data is decoded into the "m" bits, on the basis of the coding translation table, wherein the n-bit data codes have been selected such that identical logical bits do not continue for more than or equal to "k" bits even if they are time-division multiplexed and transmitted sequentially in any combination, and also on the basis of the synchronisation timing, and then reconverted to image data which is comprised of m-bit data for each pixel.

More specifically, the invention relates to a digital data transmitting method for digital data composed of a sequence of data items of m bits each and synchronisation data for setting the timing of said digital data, as defined in claim 1.

Other aspects of the invention are defined in claims 2 to 7.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Figs. 1 and 2 are schematic diagrams illustrating methods for transmitting image data, according to the related art;
Fig. 3 is a wave-form chart showing skew and crosstalk due to parallel transmission;
Figs. 4A and 4B are schematic diagrams showing the pixel layout, and the image data arrangement in the case of serialisation of the image data;
Fig. 5 is a schematic block diagram illustrating the constitution of an image display system according to the first embodiment of the image data transmitting method and the image data receiving method of the present invention;
Fig. 6 is a connection diagram explaining an example of the synchronisation data detecting circuit;
Fig. 7 is a timing chart showing the timing of parallel image data of the respective pixels and the synchronisation data for an image formed of 1024 x 768 pixels;
Fig. 8 is a diagram showing a translation table for coding between 3-bit data and 4-bit codes according to one example compatible with the preferred embodiment of the invention; and
Fig. 9 is a schematic diagram showing the data arrangement of serial image data and synchronisation data coded according to the Fig. 8 example.

### DETAILED DESCRIPTION OF THE PREFERRED EMBODIMENT

The preferred embodiment of this invention will now be described with reference to the accompanying drawings:

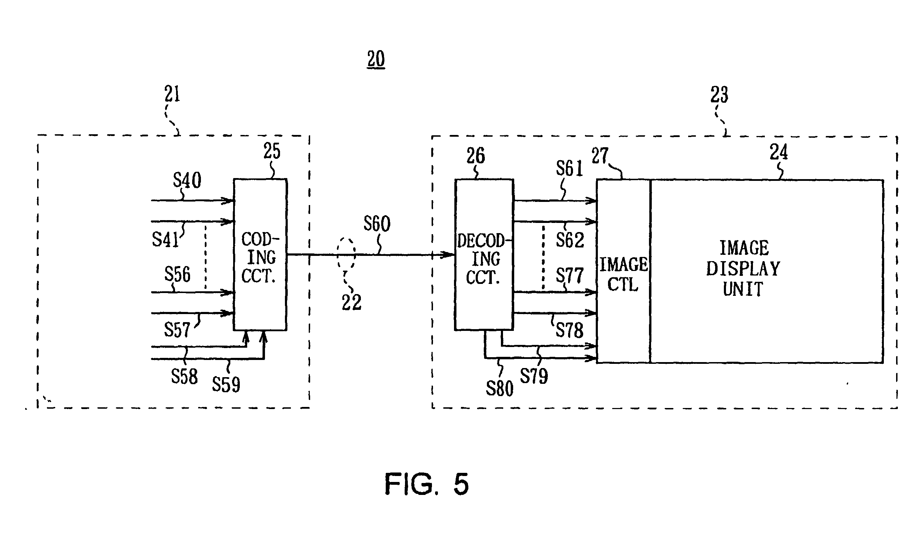

The constitution of an image display system of the preferred embodiment according to the present invention will be described with reference to Figs. 5 to 9.

Fig. 5 shows, as a whole, an image display system 20. In a main body 21, a data clock S40, m-bit parallel image data S41 to S57, and their synchronisation data S58 and S59 are superimposed by time-division multiplexing, whereby n-bit serial coded data S60 is created. The image display system 20 supplies the coded data S60 to a liquid-crystal display device 23 via a transmission cable 22 which is one transmission line, and then reconverts the coded data S60 into a data clock S61, m-bit parallel image data S62 to S78, and their synchronisation data S79 and S80.

By this means, the image display system 20 controls, in real time, the display state of the time when the image which is being processed in parallel in the main body 21 is displayed on an image display part 24 of the liquid-crystal display device 23, without a break in the image data of the respective pixels.

The main body 21 is controlled by a micro-computer (not shown), and develops image data supplied from the exterior on the video-RAM (not shown). The main body 21 supplies the m-bit parallel image data of the respective pixels on the video-RAM to a coding circuit 25 (which is constructed with integrated circuits), in the form of the image data S40 to S57 which are comprised of respective bits. So, the main body 21 translates the "m" bits of each pixel into a corresponding n-bit code word in the coding circuit 25, where m < n, and generates the coded data S60 wherein the respective n-bit code composes one word.

However, at the time of transmission of the synchronisation data S58 and S59, the coding circuit 25 of the main body 21 codes the synchronisation data S58 and S59 into an n-m bit code including a specific bit string which is a continuous stream of "k" bits of identical logic state, where k < n-m. At this time, the main body 21 stops coding of pixel image data. Then, the main body 21 adds the n-m bit code which represents the synchronisation data S58 and S59 to the start of the next m-bit image data which has not been coded, in the coding circuit 25, so that a word is constructed with "n" bits as with the other words.

The liquid-crystal display device 23 derives the synchronisation data from the serial coded data S60, in the decoding circuit 26 which is constructed with integrated circuits, sections the coded data S60 into the respective "n" bits at timings which are based on the synchronisation data, and segregates the respective words. All words of the coded data S60 are comprised of n-bits respectively, therefore, a circuit for segregating the words placed in the decoding circuit 26 can be simply constructed. The liquid-crystal display device 23 reconverts the respective words from n-bit code into "m" bits in the decoding circuit 26, and supplies parallel image data S61 to S78, which are comprised of the respective bits of the "m" bits, to the image control circuit 27.

When the specific bit string, which is the continuous "k" bits of identical logic, has been detected from the n-m bits at the forefront of a word, by the decoding circuit 26, the liquid-crystal display device 23 decides that the synchronisation data has been obtained. So, the liquid-crystal display device 23 creates the vertical synchronisation data S79 and the horizontal synchronisation data S80 in accordance with the specific bit string, at the decoding circuit 26, and supplies them to the image control circuit 27.

Then, the liquid-crystal display device 23 supplies the "m" bits, which have been obtained by eliminating the n-m bit code which includes the specific bit string, to the image control circuit 27, without decoding by the decoding circuit 26. By this means, the liquid-crystal display device 23 controls the timing of the uninterrupted m-bit parallel image data S61 to S78 at the image control circuit 27, on the basis of the vertical synchronisation data S79 and the horizontal synchronisation data S80, and causes the image display part 24 to display the image.

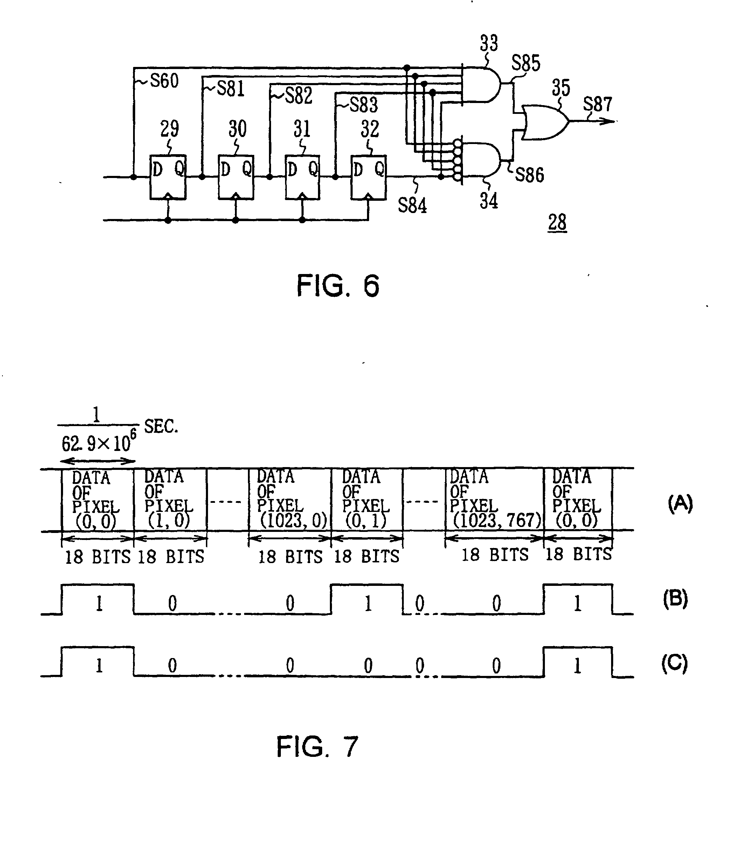

In the case where k = 5, the decoding circuit 26 can have a synchronisation data detecting circuit 28 as shown in Fig. 6 receiving serial coded data S60 so as to detect the specific bit string which is the continuous "k" bits of identical logic. The synchronisation data detecting circuit 28 delays the coded data S60 sequentially by means of four D flip-flops 29 to 32, so as to create delayed image data S81 to S84 which have been delayed by one clock period to four clock periods respectively.

The synchronous data detecting circuit 28 supplies the current code word S60 and the delayed image data S81 to S84 to an AND circuit 33 and a NAND circuit 34, as the condition inputs.

The synchronous data detecting circuit 28 supplies the output S85 of the 4-input AND circuit 33 and the output S86 of the 4-input NAND circuit 34 to an OR circuit 35, as the condition inputs. In this way, the synchronisation data detecting circuit 28 is able to detect a specific bit string which consists of five continuous logic "1"s of the data code S60, and to detect a specific bit string which consists of five continuous logic "0"s.

Next, the method of the image data translation according to the present embodiment of the present invention will be described.

When the "m" bits are translated into the n-bit code by the coding circuit 25, the main body 21 performs the translation employing the stated translation table, such that the data code S60 satisfies the first to the fourth conditions explained below. The liquid-crystal display device 23 employs the stated translation table, so as to perform the inverse translation of the n-bit code words of the coded datastream S60 into the corresponding "m" bits.

In this stated translation table, only n-bit arbitrary logic arrays can be adopted in which the maximum run length "j" of the identical logic bit satisfies j < k in all combinations of the n-bit codes at the time of translation of the "m" bits into the n-bit code. Furthermore, by this stated translation table, arbitrary "m" bits and an arbitrary n-bit code are caused to correspond to each other without overlapping (that is, there is a one-to-one relationship between m-bit data words and n-bit code words).

In addition to the first to fourth conditions described below, the coding circuit 25 constitutes the respective code words with "n" bits at all times, as stated above, and causes all words to include the pixel data, and processes the transmission of the pixel data in an uninterrupted manner.

The first condition is that the data code S60 should include a large number of data transitions in order to ease extraction of clock signals from the serial coded data S60. The second condition is that the proportion of logic "1"s to logic "0"s of the data code S60 is even or near to even. The third condition is that the data code S60 possesses such characteristics that the delimiter of the respective words can be detected when the n-bit code of the data code S60 is to be returned to the "m" bits. The fourth condition is that the number of added bits is less than that of the original data, when redundant bits are added to the original data for the purpose of serialisation.

The first condition is needed in order to derive a clock signal, that is, a signal for indicating the timing to extract the logic "0" and the logic "1" of the serial data from the serial coded data S60, the voltage of which repeatedly rises and falls, at the decoding circuit 26. The decoding circuit 26 extracts the clock signal by means of a PLL (Phase Locked Loop) circuit or a SAW filter resonator, etc. However, if there are not enough data transitions, the PLL circuit tends to detune, and the output of the filter is lowered. For this reason, it is desirable that one or more data transitions should occur in every four to five bits of coded data.

For instance, in raw image data obtained by imaging an object, image data corresponding to a perfect black image which is displaying black colour on the whole surface of the display screen is possible, therefore, the number of data transitions may be greatly reduced. For this reason, at the time of translation of the parallel image data into serial data, the original image data is commonly coded into some data string, and data transitions are increased.

To increase the number of data transitions, scramble or m-bit to n-bit translation are employed. The former is a method for probabilistically inhibiting occurrence of such data that identical value logical bits continue for a long time, using a pseudo-random number generating circuit. The latter is a method for generating data transitions by force, by translating the original m-bit data into n-bit data in accordance with a certain rule. On the receiving side, the original data is reproduced by inverse translation.

The second condition is a condition for ensuring the receiving margin, that is, for reproducing the DC level with ease, against attenuation or distortion of the signal wave-form which are generated in the process of transmitting the serial data at a high transmission rate. To satisfy this second condition, it is desirable that the ratio of logic "1" to logic "0" should be within 1:7 to 7:1.

The third condition is a condition for detecting the timing to extract a multi-bit data (word) which forms a set corresponding to pixel data of a certain time point on the transmitting side, as one set on the receiving side. To satisfy the third condition, a data string including a specific bit string which does not exist at all in other parts of the serial data, or very rarely exists (that is, a header) is usually inserted somewhere in the serial data. By this header (which is a serial code), the timing to extract a word can be transmitted from the transmitting side to the receiving side. As stated above, the coding circuit 25 inserts the n-m bit code including the specific bit string which is the continuous "k" bits of identical logic as the header, so as to transmit the synchronisation timing.

The fourth condition is such that the bits which are added for the purpose of satisfying the above-mentioned third condition, for instance the bits which are added due to m-bit to n-bit translation or the bits of the header, are less than the original data. The fourth condition is a condition for suppressing excessive rising of the transmission rate of the serial data and for alleviating the burden of the serial transmission hardware, and 1.4 times the original data or below is desirable.

Next, the operation of the preferred embodiment of the present invention will be described.

In the above constitution, it is now assumed that the horizontal pixel number and the vertical pixel number of the display screen of the liquid-crystal display device 23 are respectively 1024 and 768, and the respective gradations of red, green and blue are displayed with 6 bits for each pixel, and 262,144 colours of 6 x 3 = 18 bits are displayed. Furthermore, it is assumed that the display rate is 80 [picture/sec], and the synchronisation data is comprised of the vertical synchronous data and the horizontal synchronisation data. To realise such displaying, the main body 21 is required to supply the image control circuit 27 with image data of the pixels of 80 [picture/sec] x 1024 [column] x 768 [row] ≒ 62.9 x 10⁶ [pixels/sec].

At this time, as shown in Fig.7, the main body 21 translates, for each one sheet of the image, the 18-bit image data (A) of the respective pixels which range from the first pixel on the scanning line (0, 0) to the last pixel (1023, 767) into 24-bit data codes, independently or along with the horizontal synchronisation data (B) and the vertical synchronisation data (C), in accordance with the different procedures which depend on the logic level of the synchronisation data, and then transmits them.

Next, the method of data code translation according to the preferred embodiment of the present invention will be described.

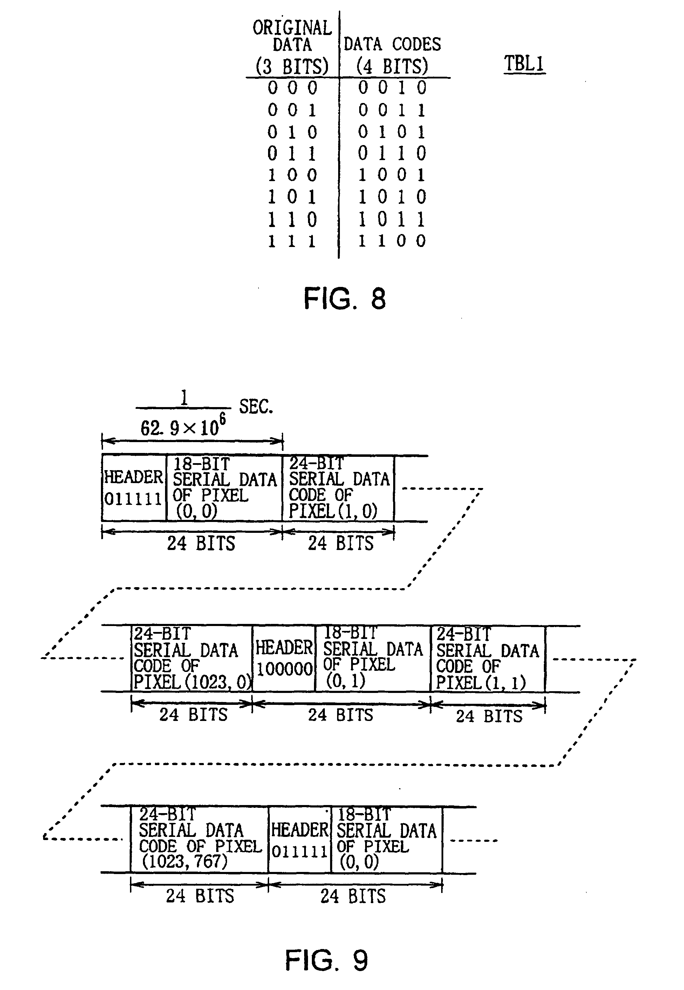

First, an explanation is given of the case where the horizontal synchronisation data and the vertical synchronisation data are at logic "0" level (hereinafter, this is referred to as that the synchronisation data is inactive). At this time, the main body 21 sections the 18-bit image data of each pixel into 3-bits, in the coding circuit 25, and then translates them into 4-bit codes, causing the respective 3-bits to correspond to the 4-bit codes in accordance with the translation table TBL1, shown in Fig. 8, which is a coding translation table.

Then, the main body 21 sequentially arranges six 4-bit codes which have been obtained in response to the 18-bit data, in series, so as to create a word of the 24-bit code. In this way, the image data for each pixel has been translated from 18-bit to 24-bit. Where, m = 18, and n = 24, and so m<n is satisfied.

In this connection, the 4-bit codes "0010", "0011", "0101", "0110", "1001", "1010", "1011" and "1100" which are included in the translation table TBL1 can be caused to correspond to arbitrary 3-bit data, respectively.

Next, an explanation is given of the case where the horizontal synchronisation data or the vertical synchronisation data are in the "1" logic state (hereinafter, this is referred to as that the synchronisation data is active). As shown in Fig. 7, this case includes such a state that only the horizontal synchronisation data is in logic "1" and also such a state that the horizontal synchronisation data and the vertical synchronisation data are in logic "1" concurrently.

When the synchronisation data is active, the main body 21 places the 18-bit image data behind a header which is comprised of the 6-bit (= n-m) code in sequence, so as to create a 24-bit code, at the coding circuit 25. When only the horizontal synchronisation data is in logic "1", the main body 21 constitutes a header with the bit string "100000", at the coding circuit 25. On the other hand, when both synchronous data are in logic "1", the main body 21 constitutes a header with the bit string "011111", at the coding circuit 25.

Accordingly, a header includes the specific bit string in which there is a string of logic "0"s or logic "1"s. Thus, "k" becomes 5, and so this satisfies the condition k<n-m. In this way, as shown in Fig. 9, the main body 21 translates the 18-bit image data, along with the header, into 24-bit codes, and sequentially couples them up, so as to create the serial codestream S60 in which the image data of the respective pixels is not broken.

Next, it will be explained how the serial coded data S60 shown in Fig. 9 satisfies the above-mentioned first to fourth conditions. Firstly, it is known that the words which correspond to the case where the synchronisation data is inactive occupy an overwhelming proportion (1023/1024) out of the 1024 words which constitute the serial data code S60. In the translation table TBL1 shown in Fig. 8, data transitions occur at least one in each of the 4-bit codes. By this means, the serial codestream S60 includes data transitions in the probability of 25% or more. Therefore, the clock signals can be easily extracted, and the first condition is satisfied.

Furthermore, even in the most one-sided of the code words (that is the code word having least balance between the logic "1"s and logic "0"s) out of the 4-bit codes of the translation table TBL1, the ratio of logic "1" to logic "0" is 1 : 3. So, if the image data is wholly translated into that specific 4-bit code, the ratio of logic "1" to logic "0" is limited to the range 1 : 3 to 3 1. Therefore, the DC level can be easily reproduced with respect to the coded data S60, and so the second condition is satisfied.

Next, even when the 4-bit codes of the translation table TBL1 are combined in any order and arranged in series, the run length of continuous logic "1" or logic "0" does not equal or exceed five. Accordingly, when the specific bit string which is the continuous five logic "1"s or the continuous five logic "0"s has been detected from the leading 6 bits of a 24-bit code word, the liquid-crystal display device 23 is able to decide that the header has been inserted therein and that the timing when the synchronisation data is active has been transmitted.

Accordingly, the liquid-crystal display device 23 is able to employ the header as the reference for establishing the word synchronisation for recognising the delimiters of the serial data code words S60, one word of which is 24 bits, and for reconverting the n-bit serial codes into the m-bit parallel image data S61 to S78, without interruption of the image data of the pixels. Besides, the liquid-crystal display device 23 is always able to steadily receive the image data of the pixels, as the image data of the pixels are unbroken even during the time when the header is being received.

Even if the image data has been interrupted during transmission thereof, the liquid-crystal display device 23 is able to easily obtain the synchronisation timing for the new horizontal scanning line, by detecting the specific bit string. In this way, the data code S60 satisfies the third condition.

Besides, it is not needed to count the words of the header and the words of the image data in a separate manner, as the lengths of all words of the coded data S60 are identical, therefore, the circuit for counting the words can be simply constituted.

In this connection, when the synchronisation data is active, the 18-bit image data which has been not translated is transmitted, subsequently to the header. It is possible that five or more logic "1"s accidentally continue or five or more logic "0"s accidentally continue, in the 18-bit image data. Therefore, after the specific bit string placed in the header has been once detected at the synchronous data detecting circuit 28, the detecting function of the synchronous data detecting circuit 28 is inhibited until, at least, it is switched to the next word, so that it is able to prevent incorrectly detect the timing when the synchronisation data is activated.

Lastly, the data for each pixel in the coded data S60 has been increased by 6 bits in comparison with the original image data. The transmission rate of the data code S60 of this time becomes 62.9 x 10⁶ x 24 = 1.51 x 10⁹ bit/sec. On the other hand, the transmission rate of the original image data becomes 62.9 x 10⁶ x 18 = 1.13 x 10⁹ [bit/sec]. The ratio of the transmission rates of the data code S60 to the original image data becomes 1.33, and does not exceed 1.4 times of the original data. This ratio is permitted in practice, from the point of view of the burden of the hardware. In this way, the coded data S60 satisfies the fourth condition.

According to the above constitution, under the condition of n > m and k < n-m, when the synchronisation data is not transmitted, the m-bit image data for the respective pixels are translated into the n-bit codes and then transmitted in series, such that even if any random combination of the n-bit codes is sequentially transmitted in series there is not a run of "k" or more identical logical bits. On the other hand, when the synchronisation data is transmitted, the m-bit image data of a pixel is directly arranged in series without being coded, and to this data, a header which is comprised of serial n-m bits and includes the specific bit string which is the continuous "k" bits of identical logic is added, so that the parallel image data and the synchronisation data can be transmitted and received through one transmission cable 22 without a break of transmission or reception of the parallel image data.

Moreover, this technique permits a further increase in the transmission distance of the image data to the liquid-crystal display device 23, in comparison with the cases of parallel digital or analog transmissions.

Further, according to the invention it is possible to transmit image data by means of a low-cost small-sized connector and a further large flexible transmission cable which is based on that there is only one cable.

Next other embodiments of the present invention will be described.

In the above embodiment, the description has been given of the case where m = 18, n = 24, k = 5, and j = 4. However, the present invention is not limited to this case, but under the condition of n > m, k < n-m, and j < k, "n", "m", "k", and "j" may be set to arbitrary numbers.

Further, in the above embodiment, the description has been given of the case where at the time when the 18 bits are translated into a 24-bit code, 3 bits are translated into a 4-bit code, and the 4-bit codes are combined so as to obtain a 24-bit code. However, the present invention is not limited to this case, but is applicable also to the case where code words of an arbitrary number of bits are combined so as to obtain a code word which has the desired number of bits.

Further, in the above embodiment, the description has been given of the case where a liquid-crystal display device is employed. However, the present invention is not limited to this case, but is applicable also to the case where an arbitrary image display device is employed in which the image is controlled by the digital signal, such as a plasma display.

Furthermore, in the above embodiment, the description has been given of the case where the serial coded data S60 is transmitted through the transmission cable 13. However, the present invention is not limited to this case, but is applicable to such a case that the serialised image data is transmitted by electromagnetic waves such as radio waves or infrared rays.

As described above, according to the present invention, under the condition of n > m and k < n-m, when the synchronisation data is not transmitted, the m-bit image data for the respective pixels are translated into n-bit codes and then time-division multiplexed and transmitted, in which even if any combination of the n-bit codes are sequentially time-division multiplexed and transmitted identical logical bits do not continue for more than or equal to "k" bits, on the other hand, when the synchronisation data is transmitted, the m-bit image data of the pixel is directly time-division multiplexed, and to this data, a serial code which is comprised of n-m bits and includes the specific bit string which is a continuous "k" bits of the identical logic is added, so that the image data transmitting method and the image data receiving method can be realised wherein the image data and the synchronisation data can be transmitted and received through one transmission line without a break of transmission or reception of the image data.

While there have been described above certain preferred embodiments of the invention, it will be obvious to those skilled in the art that various changes and modifications may be made, within the scope of the appended claims.

## Claims

1. A digital data transmitting method for digital data composed of a sequence of data items of m bits each and synchronisation data for setting the timing of said digital data, the method comprising :
coding (25) each said data items into a coded data item of n bits using a coding translation table (TBL1) that enables unambiguously determining a data item from a respective coded data item,
wherein n > m, a number k is set such that k < n-m, and n, m and k are integer numbers greater than zero,
the coding being such that when multiplexing the coded data with each other in any combination bits of identical logic state cannot form a sequence longer than k-1;
transmitting said digital data and said synchronisation data in such a manner that
at times when a synchronisation state is considered to be active, transmitting a multiplexed data word of n bits comprising a specific bit string of n-m bits having at least k sequential bits of identical logic state as said synchronisation data, and comprising a said data item of m bits that is timely associated with said synchronisation state;
at times after a synchronisation state is considered to be active, sequentially transmitting coded data items that correspond to data items following said timely associated data item.

2. The method according to claim 1, wherein said specific bit string of n-m bits is arranged at the beginning of said multiplexed n-bit data word.

3. The method according to claim 1 or 2, wherein said digital data are digital image data.

4. The method according to claim 3, wherein said synchronisation data are vertical and horizontal synchronisation data.

5. The method according to claim 3 or 4, wherein said timely associated m-bit data item in said multiplexed data word corresponds to the first pixel on a scanning line of an image.

6. The method according to any one of claims 3 to 5, wherein said m-bit data items correspond to respective pixels of an image.

7. A method for receiving digital data sequentially transmitted according to the method defined in any of claims 1 to 6, the method comprising :
sequentially receiving (26) said transmitted digital data;
checking (28) the received digital data to detect a said specific bit string;
when a said specific bit string has been detected, identifying (26) a sequence of received n bits as said multiplexed data word, setting the synchronisation timing of the received digital data, and separating said timely associated m-bit digital data item from said multiplexed data word;
after a said specific bit string has been detected and before another said specific bit string is detected, separating the data received after said identified multiplexed data word into a sequence of coded data items of n bits each and decoding said coded data items of n bits into decoded data items of m bits in accordance with said coding translation table.

## Patentansprüche

1. Digitales Datenübertragungsverfahren für digitale Daten, die aus einer Sequenz von Datenelementen aus jeweils m Bits und Synchronisationsdaten zur Einstellung des Timings der digitalen Daten zusammengesetzt sind, wobei das Verfahren aufweist:
Codieren (25) jedes der Datenelemente in ein codiertes Datenelement aus n Bits unter Verwendung einer Codierungstranslationstabelle (TBL1), die eine unzweideutige Bestimmung eines Datenelements aus einem jeweiligen codierten Datenelement ermöglicht,
wobei n > m gilt, eine Zahl k so eingestellt ist dass k < n-m gilt, und n, m und k ganze Zahlen größer als null sind,
die Codierung derart ist, dass, wenn die codierten Daten in einer beliebigen Kombination miteinander gemultiplext werden, Bits eines identischen logischen Zustandes nicht eine Sequenz länger als k-1 bilden können,
Übertragen der digitalen Daten und der Synchronisationsdaten derart, dass
zu Zeitpunkten, bei denen ein Synchronisationszustand als aktiv angesehen wird, ein gemultiplextes Datenwort aus n Bits, das eine spezifische Bitfolge aus n-m Bits, die wenigstens k sequentielle Bits eines identischen logischen Zustandes als die Synchronisationsdaten aufweist, und das Datenelement aus m Bits, das dem Synchronisationszustand zeitlich zugeordnet ist, aufweist, übertragen wird,
zu Zeitpunkten nach denen ein Synchronisationszustand als aktiv angesehen wird, codierte Datenelemente, die mit auf das zeitlich zugeordnete Datenelement folgenden Datenelementen korrespondieren, sequentiell übertragen werden.

2. Verfahren nach Anspruch 1, wobei die spezifische Bitfolge aus n-m Bits am Anfang des gemultiplexten n-Bit-Datenwortes angeordnet ist.

3. Verfahren nach Anspruch 1 oder 2, wobei die digitalen Daten digitale Bilddaten sind.

4. Verfahren nach Anspruch 3, wobei die Synchronisationsdaten Vertikal- und Horizontalsynchronisationsdaten sind.

5. Verfahren nach Anspruch 3 oder 4, wobei das zeitlich zugeordnete m-Bit-Datenelement im gemultiplexten Datenwort mit dem ersten Pixel auf einer Abtastzeile eines Bildes korrespondiert.

6. Verfahren nach einem der Ansprüche 3 bis 5, wobei die m-Bit-Datenelemente mit jeweiligen Pixeln eines Bildes korrespondieren.

7. Verfahren zum Empfang digitaler Daten, die gemäß dem in einem der Ansprüche 1 bis 6 definierten Verfahren sequentiell übertragen werden, wobei das Verfahren aufweist:
sequentielles Empfangen (26) der übertragenen digitalen Daten,
Prüfen (28) der empfangenen digitalen Daten, um eine genannte spezifische Bitfolge zu detektieren,
wenn eine spezifische Bitfolge detektiert worden ist, Identifizieren (26) einer Sequenz aus empfangenen n Bits als das gemultiplexte Datenwort, Einstellen des Synchronisationstimings der empfangenen digitalen Daten und Separieren des zeitlich zugeordneten digitalen m-Bit-Datenelements vom gemultiplexten Datenwort,
nachdem eine spezifische Bitfolge detektiert worden ist und bevor eine andere spezifische Bitfolge detektiert wird, Separieren der nach dem identifizierten gemultiplexten Datenwort empfangenen Daten in eine Sequenz codierter Datenelemente aus jeweils n Bits und Decodieren der codierten Datenelemente aus n Bits in decodierte Datenelemente aus m Bits entsprechend der Codierungstranslationstabelle.

## Revendications

1. Procédé de transmission de données numériques pour des données numériques composées d'une suite d'éléments de données de m bits chacun et de données de synchronisation pour fixer le cadencement desdites données numériques, le procédé comprenant :
le codage (25) de chacun desdits éléments de données en un élément de données codées de n bits en utilisant une table de conversion de codage (TBL1) qui permet de déterminer clairement un élément de données à partir d'un élément de données codées respectif,
dans lequel n étant > m, on se fixe un nombre k tel que k < n-m et n, m et k sont des nombres entiers supérieurs à zéro,
le codage étant tel que lorsqu'on multiplexe les données codées les unes avec les autres dans une combinaison quelconque des bits d'état logique identique ne puissent pas former de suite plus longue que k-1;
la transmission desdites données numériques et desdites données de synchronisation de façon à
aux instants où un état de synchronisation est considéré comme actif, transmettre un mot de données multiplexées de n bits comprenant une chaîne de bits spécifique de n-m bits ayant au moins k bits successifs d'état logique identique comme lesdites données de synchronisation et comprenant un dit élément de données de m bits qui est associé temporellement audit état de synchronisation;
aux instants après qu'un état de synchronisation a été considéré comme actif, transmettre séquentiellement des éléments de données codées qui correspondent à des éléments de données suivant ledit élément de données associé temporellement.

2. Procédé selon la revendication 1, dans lequel ladite chaîne de bits spécifique de n-m bits est disposée au début dudit mot de données multiplexées de n bits.

3. Procédé selon la revendication 1 ou 2, dans lequel lesdites données numériques sont des données numériques d'image.

4. Procédé selon la revendication 3, dans lequel lesdites données de synchronisation sont des données de synchronisation verticale et horizontale.

5. Procédé selon la revendication 3 ou 4, dans lequel ledit élément de données de m bits associé temporellement dans ledit mot de données multiplexées correspond au premier pixel d'une ligne de lecture par balayage d'une image.

6. Procédé selon l'une quelconque des revendications 3 à 5, dans lequel lesdits éléments de données de m bits correspondent à des pixels respectifs d'une image.

7. Procédé pour recevoir séquentiellement des données numériques transmises selon le procédé défini dans l'une quelconque des revendications 1 à 6, le procédé comprenant :
la réception sérielle (26) desdites données numériques transmises;
la vérification (28) des données numériques reçues pour détecter une desdites chaînes de bits spécifiques;
quand ladite chaîne de bits spécifique a été détectée, l'identification (26) d'une suite de n bits reçus comme ledit mot de données multiplexées, la fixation d'un cadencement de synchronisation des données numériques reçues et la séparation dudit élément de données numériques de m bits associé temporellement dudit mot de données multiplexées;
après qu'une desdites chaînes de bits spécifiques a été détectée et avant qu'une autre desdites chaînes de bits spécifiques soit détectée, la séparation des données reçues après ledit mot de données multiplexées identifié en une suite d'éléments de données codées de n bits chacun et le décodage desdits éléments de données codées de n bits en éléments de données décodées de m bits d'après ladite table de conversion de codage.
